(19) Europäisches Patentamt
European Patent Office
Office européen des brevets

(11) **EP 1 806 374 A1**

(12) **EUROPEAN PATENT APPLICATION**
published in accordance with Art. 158(3) EPC

(43) Date of publication:
**11.07.2007 Bulletin 2007/28**

(51) Int Cl.:
*C08G 18/48* (2006.01)  *C08G 101/00* (2006.01)

(21) Application number: **05788094.0**

(22) Date of filing: **30.09.2005**

(86) International application number:
**PCT/JP2005/018164**

(87) International publication number:
**WO 2006/035941 (06.04.2006 Gazette 2006/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.09.2004 JP 2004286466**
**09.12.2004 JP 2004357396**

(71) Applicant: **TOHO CHEMICAL INDUSTRY CO., LTD.**
**Tokyo 104-0044 (JP)**

(72) Inventors:
• HASEGAWA, Miki, c/o TOHO CHEMICAL IND. CO., LTD.
Yokosuka-shi,
Kanagawa 2370062 (JP)

• OKAWA, Tadashi, c/o TOHO CHEMICAL IND. CO., LTD.
Yokosuka-shi,
Kanagawa 2370062 (JP)

• NOGUCHI, Tomohiro, c/o TOHO CHEMICAL IND. CO. LTD.
Yokosuka-shi,
Kanagawa 2370062 (JP)

(74) Representative: **HOFFMANN EITLE**
**Patent- und Rechtsanwälte**
**Arabellastrasse 4**
**81925 München (DE)**

(54) **PROCESS FOR PRODUCING RIGID POLYURETHANE FOAM**

(57) The present invention provides a manufacturing method of a rigid polyurethane foam for a heat insulation material that satisfies performance required for practical use, such as a low thermal conductivity over a long period, and excellent adhesiveness and excellent dimensional stability under a low temperature environment. The manufacturing method of a rigid polyurethane foam for a heat insulation material, which is formed from blowing and molding using a mixture that includes polyisocyanate, a polyol, and a blowing agent, wherein a polyol prepared by addition-polymerizing ethylene oxide and propylene oxide to an aromatic monoamine compound or an aromatic diol compound.

FIG. 4 OVER-TIME DETERIORATION OF THERMAL CONDUCTIVITY RATE FOR FORMULATIONS OF EXAMPLES 1 AND 2 (25t I-SHAPED, 16t CUT CORE)

**Description**

TECHNICAL FIELD

The present invention relates to a manufacturing method of rigid polyurethane foam that is used as a thermal insulation material. More specifically, the present invention relates to a rigid polyurethane foam that maintains a low thermal conductivity rate over a long period and has good adhesiveness under a low temperature environment.

BACKGROUND ART

Rigid polyurethane foam is formed from blowing and molding using a mixture that includes polyisocyanate, a polyol, a blowing agent, and auxiliary additives such as catalysts and flame retardants. Rigid polyurethane foam is widely used as a material with excellent shapeability. Unlike fitted heat insulation materials such as expanded polystyrene, rigid polyurethane foam adheres itself to a face material or the like during blowing and has the advantage of increased strength as a composite structural member. In addition, rigid polyurethane foam can be formed by various blowing methods such as injection blowing and spray foaming. No large-scale equipment in particular is required, enabling rigid polyurethane foam to be formed at a work site.

In cases where a large amount of 1,1-dichloro-1-fluoroethane (HCFC-141b) is used as a conventional blowing agent, the thermal conductivity of the obtained rigid polyurethane foam is good and chlorofluorocarbon gas does not easily penetrate into the rigid polyurethane foam from outside. Therefore, a low thermal conductivity rate can be maintained over a long period. Furthermore, HCFC-141 b has a relatively wide selection of blowing conditions despite the fact that it is a thermosetting resin. In general, rigid polyurethane foam expands while increasing the temperature of a surface in direct contact therewith during blowing, although when HCFC-141b is used under the spray method, for example, blowing is achieved without any particular heat increase even in cold climates.

However, the manufacturing of hydrochlorofluorocarbons such as HCFC-141b was stopped at the end of 2003 due to the destructive effect on the ozone layer. The following are available as blowing agents that are considered to have long-term usability in terms of environmental properties and no destructive effect on the ozone layer: carbon dioxide generated from a reaction between polyisocyanate and water, or carbon dioxide in a supercritical, subcritical or liquid state; hydrocarbons (HCs) such as isobutane, n-pentane, cyclopentane, isopentane, n-hexane, cyclohexane, isohexane, and heptane; and hydrofluorocarbons (HFCs) such as 1,1,1,3,3-pentafluorobutane (HFC-365mfc), 1,1,1,3,3-pentafluoropropane (HFC-245fa), and 1,1,1,2-tetrafluoroethane (HFC-134a). However, all of these possess various disadvantages compared to hydrochlorofluorocarbon.

For example, the hydrocarbon blowing agent is considered a hazardous material under fire protection laws, and requires a large sum of capital investment that makes usage difficult outside of mass production lines such as that for refrigerators. Hydrofluorocarbons have a greenhouse effect that impacts global warming, and there is a risk that future use will not be possible. Accordingly, the use of carbon dioxide-blown rigid polyurethane foam is likely to expand in the future. However, the high gas thermal conductivity rate of carbon dioxide compared to chlorofluorocarbon leads to a problem where there is considerable deterioration of the heat insulation performance of such rigid polyurethane foam compared to related art in general. Usage may not be possible in cases where the insulation thickness cannot be increased due to the product shape, installation location or the like, and rigid polyurethane foam is particular unsuitable for use as a heat insulation material in the field of refrigeration. Furthermore, carbon dioxide is known to have higher permeability than air, and extremely high permeability with respect to polyurethane resin films as compared to chlorofluorocarbon, which is a blowing agent with a large molecular weight. For this reason, carbon dioxide tends to gradually escape from cells to outside over a long period. Therefore of course in cases of all water blowing (100% water blowing), but also in cases where the original proportion of water used in the formulation is high, there still remains the problem of being unable to maintain the initial value of the thermal conductivity rate of the rigid polyurethane foam over a long period. This problem also exists in cases where carbon dioxide in a supercritical, subcritical, or liquid state, or the like is used as a blowing agent, and is very difficult to resolve. Patents concerning carbon dioxide in a supercritical, subcritical, and liquid state include the patent titled "Method for Producing Rigid Polyurethane Foam" (Patent Document 1).

In cases where a chlorofluorocarbon blowing agent is used, particularly in fields where thermal conductivity is required such as in applications for rigid polyurethane foam used as a thermal insulation material in buildings or the like using a spray method or for metal siding material, shutters or the like manufactured using a continuous lamination method, polyether polyol where alkylene oxide is subjected to addition to a Mannich condensate, ethylenediamine or the like, for example, is often generally used as a polyol component. Moreover, for rigid polyurethane foam used as a thermal insulation material for refrigerating and freezing units or the like through injection molding, a polyether polyol where alkylene oxide is subjected to addition to sugar, toluenediamine or the like, for example, is often generally used as a polyol component. If a large amount of carbon dioxide is used for the blowing agent, then the thermal conductivity rate of a rigid polyurethane foam obtained from a polyether polyol thereof exhibits particularly significant deterioration over time. Accordingly, for fields where heat insulation performance is particularly required, use of substances such as the following at present is unavoidable: HFC-245fc or HFC-365mfc, which are expensive greenhouse gases that arc difficult to handle due to a low boiling point or combustibility; and cyclopentane, which is combustible and requires a large amount of investment for manufacturing equipment. Consequently, there are strong hopes for the development of a rigid polyurethane foam that uses all water or carbon dioxide as the main blowing agent, and which maintains its initial thermal conductivity rate over a long period and has good heat insulation performance. Patents concerning the over-time deterioration of the thermal conductivity rate include: a patent titled "Method for Producing Polyurethane Foam with Closed Cell" (Patent Document 2); a patent titled "Polyol for Use in Polyurethane Foam with Improved Maintenance of Heat Insulation Performance, Polyurethane Foam Manufactured Therefrom, and Manufacturing Method Thereof" (Patent Document 3); a patent titled "Rigid Polyurethane Foam and Heat Insulator" (Patent Document 4). In addition, patents concerning polyols that improve the thermal conductivity rate include a patent titled "Production Method for Rigid Polyurethane Foam" (Patent Document 5).

Meanwhile, many urea bonds are generated by the reaction between polyisocyanate and water. The urea bonds have a high bond energy, which requires more heat. Therefore, rigid polyurethane foam that uses a large amount of water in formulation is more likely to become a weak foam with a low molecular weight, because polymerization does not adequately proceed under a lower temperature environment during blowing. Such a state is known as friability, and rigid polyurethane foam with friability does not exercise adequate self-adhesiveness to a joining surface. Therefore, defects such as detachment, separation, and the like are likely to occur under a low temperature environment.

Thus regarding injection molding, for example, in the case of conventional HCFC-141b blowing, the temperature of a directly contacting surface during blowing is generally heated to 35 to 45°C for blowing. Under blowing conditions similar to the ambient air temperature, blowing can be performed without heating the directly contacting surface during blowing. On the other hand, in the case of rigid polyurethane foam that uses a large amount of water in the formulation, it is generally necessary to increase the temperature of the surface to 45 to 50°C, making blowing under blowing conditions similar to the ambient air temperature or the like extremely difficult. Regarding a spray method performed outdoors as well, generally the temperature of the directly contacting surface during blowing is not increased, and at such time no problems are found in the case of conventional HCFC-141 b blowing. However, in the case of, all water-blown rigid polyurethane foam, adhesion failure due to friability becomes a problem. In other words, there exists a problem where rigid polyurethane foam that uses a large amount of water in the formulation is prone to adhesion failure under a low temperature environment. Thus, improved friability under a low temperature environment is called for as a solution. Patents concerning adhesiveness under low temperatures include a patent titled "Production of Spray Type Rigid Polyurethane Foam" (Patent Document 6).

Furthermore, rigid polyurethane foam blown by carbon dioxide is known to have worse dimensional stability and a larger dimensional change rate at low density levels compared to foam blown by the conventional HCFC-141b. Such foam when left under normal temperatures gradually shrinks over a long period, and abnormalities in the appearance of the product may ultimately result. A cause behind this is considered to be carbon dioxide in cells in the foam that becomes more likely to pass through the polyurethane resin film to outside, and thus become more prone to being released outside. Accordingly, an improvement in dimensional stability is called for through the development of a rigid polyurethane foam or the like that carbon dioxide is not likely to permeate. Patents concerning the dimensional stability of all water-blown rigid polyurethane foam include a patent titled "Method for Producing Rigid Polyurethane Foam" (Patent Document 7) and a patent titled "Production of Rigid Polyurethane Foam" (Patent Document 8).

The selection of polyol for rigid polyurethane foam is critical because of its large effect on the performance of such foam. A polyol or the like where alkylene oxide is subjected to addition to a conventional Mannich condensate, ethylenediamine or the like, or a polyol or the like where alkylene oxide is subjected to addition to sugar, toluenediamine or the like may be selected for rigid polyurethane foam that uses a large amount of water in the formulation. However, using such polyols would make it difficult to obtain a rigid polyurethane foam that adequately achieves the required performance needed for practical application, such as a low thermal conductivity rate with little deterioration over time, low friability and excellent adhesiveness under low temperature environments, and excellent dimensional stability. The present invention provides a method for resolving such issues.

Patent Document 1: Japanese Patent Application Publication No. JP-A-2004-107376

Patent Document 2: Japanese Patent Application Publication No. JP-A-2002-302528

Patent Document 3: Japanese translation of PCT International Application No. JP-AH08-501346

Patent Document 4: Japanese Patent Application Publication No. JP-A-2001-27074

Patent Document 5: Japanese Patent Application Publication No. JP-A-2001-354744

Patent Document 6: Japanese Patent Application Publication No. JP-A-H05-97956

Patent Document 7: Japanese Patent Application Publication No. JP-A-2004-115772

Patent Document 8: Japanese Patent No. 3547190

DISCLOSURE OF THE INVENTION

Problem to be solved by the Invention

It is an object of the present invention to provide a rigid polyurethane foam that is suited to water or carbon dioxide blowing, and whose thermal conductivity rate exhibits little deterioration over time; the rigid polyurethane foam also having excellent adhesiveness with little friability and excellent dimensional stability under a low temperature environment.

Means for Solving the Problem

The inventors of the present invention focused on the fact that foam obtained based on related art from a polyol that uses aniline as an initiator provides micro cellular foam, a low thermal conductivity rate, and good dimensional stability. To achieve this object again for all water blowing, the inventors varied the type, mass ratio, and hydroxyl value of alkylene oxide, and synthesized various aniline polyols for evaluation. The subsequent results indicated that the over-time deterioration of the thermal conductivity rate is distinctly small within a certain identified range.

According to the results of an evaluation it was also found that practically the same effect can be obtained with an aromatic monoamine polyol, i.e., an aromatic monoamine compound whose configuration resembles that of aniline, which uses anisidine, xylidine, toluidine, nitroaniline, or the like as a starting material, and to which alkylene oxide is added.

Applying such knowledge, according to the results of an evaluation it was further found that practically the same effect can be obtained with a polyol, i.e., an aromatic diol compound, which uses resorcin, dihydroxynaphthalene, or the like as a starting material, and to which alkylene oxide is added. The present invention was thus completed in light of such knowledge.

Namely, according to a first aspect of the present invention, a manufacturing method of a rigid polyurethane foam for a heat insulation material, which is formed from blowing and molding using a mixture that includes polyisocyanate, a polyol, and a blowing agent, is characterized in that a polyol with a hydroxyl value of 250 to 500 mg KOH/g and where ethylene oxide and propylene oxide are subjected to addition to and polymerized with an aromatic monoamine compound at a mass ratio of 50 to 100 : 50 to 0 for a total molar quantity of 3 to 7 moles is used for at least a portion of the polyol component, and the polyol is used in an amount of 20 to 100 parts by mass based on 100 parts by mass of the polyol component in a formulation.

The aromatic monoamine compound preferably has a molecular weight of 90 to 170. Furthermore, the aromatic monoamine compound is preferably any one or arbitrary combination selected from the group consisting of aniline, anisidine, aminoacetoanilide, aminophenol, aminobenzoic ethyl ester, isopropoxyaniline, xylidine, cresidine, toluidine, phenetidine, $\alpha$-phenylethylamine, $\beta$-phenylethylamine (phenethylamine), benzylamine, nitroaniline, and isomers thereof.

According to a second aspect of the present invention, a manufacturing method of a rigid polyurethane foam for a heat insulation material, which is formed from blowing and molding using a mixture that includes polyisocyanate, a polyol, and a blowing agent, is characterized in that at least one polyether polyol with a hydroxyl value of 230 to 500 mg KOH/g and where ethylene oxide and propylene oxide are addition-polymerized to an aromatic diol compound at a mass ratio of 50 to 100 : 50 to 0 for a total molar quantity of 3 to 7 moles is used for at least a portion of the polyol component, and the polyether polyol is used in an amount of 20 to 100 parts by mass based on 100 parts by mass of the polyol component in a formulation.

The aromatic diol compound preferably has a molecular weight of 90 to 170. Furthermore, the aromatic diol compound is preferably any one or arbitrary combination selected from the group consisting af catechol, dihydroxynaphthalene, resorcin, and isomers thereof.

Moreover, in the manufacturing method of a rigid polyurethane foam for a heat insulation material according to the present invention, it is preferable that the blowing agent is mainly carbon dioxide.

Effects of the Invention

According to the present invention, it is possible to provide a rigid polyurethane foam that is suited to water or carbon dioxide blowing, and whose thermal conductivity rate exhibits little deterioration over time; the rigid polyurethane foam also having excellent adhesiveness with little friability and excellent dimensional stability.

BEST MODES FOR CARRYING OUT THE INVENTION

The present invention will be described in detail below, including a brief background leading up to achievement of the present invention.

In general, the thermal conductivity rate of rigid polyurethane foam includes the thermal conductivity of gas in cells, the thermal conductivity from radiation, the thermal conductivity of a solid layer based on heat passing through the resin, and the thermal conductivity from convection. Carbon dioxide-blown rigid polyurethane foam has a high thermal conductivity rate and poor heat insulation performance. This is said to be due to the high thermal conductivity rate of carbon dioxide compared to the thermal conductivity rate of chlorofluorocarbon gas. By setting the blowing agent to 100% water and fixing the molar quantity of carbon dioxide in the formulation, the thermal conductivity of gas can be made constant. If the diameter of cells in the rigid polyurethane foam can be fixed, then the thermal conductivity from radiation can be largely made constant. Convection does not occur with cells having a diameter of 0.4 mm or less, and therefore the thermal conductivity from convection can be ignored.

Thus, in fixing the above-mentioned conditions and the cell diameter and changing only the polyol, it should be possible to learn the correlation between the thermal conductivity of the solid layer and the polyol by preparing an all water-blown rigid polyurethane foam and measuring the initial value of the thermal conductivity rate. However, measurement results obtained in the above manner showed that there was almost no difference between common polyols regarding the initial value of the thermal conductivity rate for all water-blown rigid polyurethane foam. Next, the molar quantity of carbon dioxide in the formulation was likewise made constant, while fixing the polyol and varying the cell diameter. The thermal conductivity rate was then measured. In theory, a smaller cell diameter should lead to less thermal conductivity from radiation. However, in the case of 100% rigid polyurethane foam, the formulation with the smallest cell diameter size showed only a slight decrease in the initial value of the thermal conductivity rate, and there was no large difference compared to the thermal conductivity rates of formulations with common cell diameter sizes. Accordingly, the effect of the thermal conductivity of gas is considered to be much greater than that due to the thermal conductivity from radiation or the thermal conductivity of the solid layer based on heat passing through the resin. Achieving a considerable improvement in the initial value of the thermal conductivity rate by changing only the polyol is also considered difficult.

The inventors of the present invention focused on increasing the carbon dioxide barrier property of a resin structuring the rigid polyurethane foam in order to seal carbon dioxide in cells, thereby minimizing over-time variations in the thermal conductivity rate. Provided that the initial value for the thermal conductivity rate of the carbon dioxide-blown rigid polyurethane foam is within an allowed limit and the over-time change of the thermal conductivity rate is similar to that for HCFC-141b, then it should be possible to use such rigid polyurethane foam in applications for the refrigeration field without resulting in considerable design changes. Moreover, if such a feat can be achieved, then an improvement in dimensional stability can also be expected.

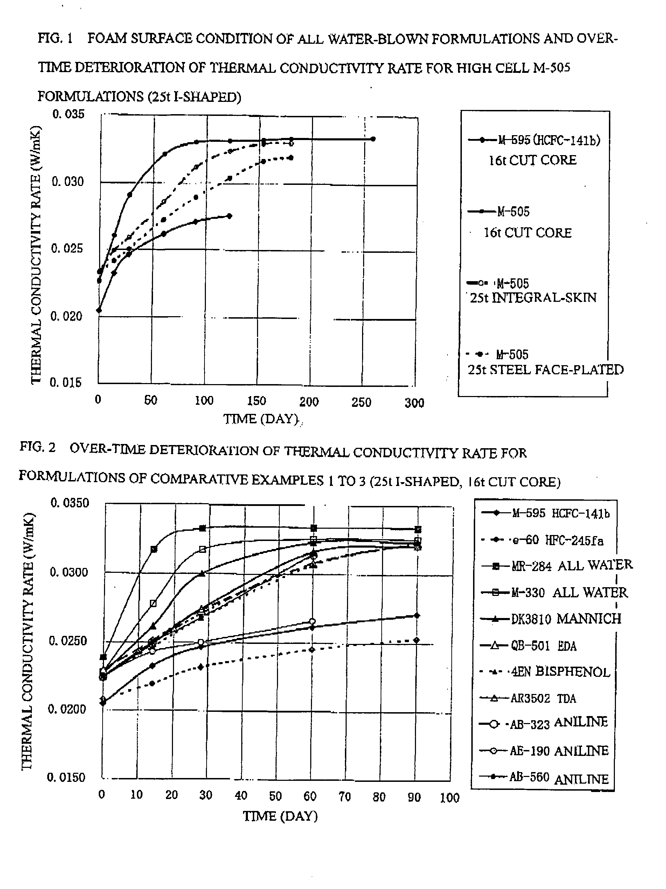

In order to promote the permeation of carbon dioxide in cells of all water-blown rigid polyurethane foam, panel foam was cut to a thickness of 16 mm, left at normal temperature and then measured. FIG. 1 shows a graph of the over-time change in thermal conductivity rates for a core foam cut to a 16-mm thickness, overall foam, and steel face-plated foam, which were similarly formulated (using a raw material named Hycel M-595 manufactured by Toho Chemical Industry Co., Ltd.) by all water blowing. Note that for comparison purposes, the result for a common chlorofluorocarbon-blown rigid polyurethane foam (using a raw material named Hycle M-505 manufactured by Toho Chemical Industry Co., Ltd.) is also shown in FIG. 1. Upon comparison, it can be seen that the thermal conductivity rate of the core foam continues to deteriorate from the initial value. After 60 to 90 days, the thermal conductivity rate becomes a constant value and attains equilibrium. The constant value was approximately 0.032 to 0.033 W/mK (0.028 kcal/mh°C). This is considered to be the result of carbon dioxide in cells permeating and escaping over time from the resin film structuring the cells, and subsequently being replaced with air. On the other hand, the overall foam required approximately 150 days to reach 0.033 W/mK. Meanwhile, the thermal conductivity rate of the steel face-plated foam, similar to that of the HCFC-141b-blown formulation, continued to deteriorate over time for more than 150 days. The slow speed of deterioration meant the evaluation took time. Accordingly, the over-time deterioration of the thermal conductivity rate was evaluated using the value after 60 days of a core foam cut to 16 mm. The evaluation was performed with a comparison of the initial value and measurement values after the 14th and 28th days as a measure of the deterioration speed. As a target, the inventors aimed to make the thermal conductivity rate after 60 days of the core foam cut to 16 mm comparable to the 0.026 W/mK after 60 days of the HCFC-141b-blown formulation, and considerably lower than the 0.033 W/mK of the all water-blown formulation.

For the all water-blown formulations, main components other than the polyol were identical and the above-mentioned conditions were fixed. The over-time deterioration of the thermal conductivity rate was then measured while varying the type of polyol. Consequently, it was found that comparisons of the initial value and the value after 60 days of the core foam cut to 16 mm differed greatly depending on the polyol used. Such was the background leading up to achievement of the present invention.

Given this background, a manufacturing method of a rigid polyurethane foam achieved according to the present invention is characterized in that the polyol used is an aromatic polyol that adopts an aromatic monoamine compound or an aromatic diol compound as a starting material.

More specifically, a first polyol used in the present invention is characterized as being an aromatic monoamine polyol that adopts an aromatic monoamine compound as a starting material, and a quantity of two active hydrogens therefor is preferred. In addition, a polyol where a predetermined amount of alkylene oxide is subjected to addition to an aromatic monoamine compound whose molecular weight is 90 to 170, or in particular 93 to 166, is preferable in terms of little over-time deterioration of the thermal conductivity rate. A large quantity of active hydrogen would require adding a large molar quantity of alkylene oxide in order to obtain a hydroxyl value suitable for the polyol, and also adversely affect the carbon dioxide barrier property. A high molecular weight would reduce the molecular weight ratio of the aromatic ring in the molecule, and adversely affect the carbon dioxide barrier property in a similar manner.

Results analyzing trends in the case where an aromatic monoamine compound is used as a starting material for a polyol showed that the most preferable aromatic monoamine polyol is one with a hydroxyl value of 250 to 500 mg KOH/g, preferably 300 to 450 mg KOH/g, and where ethylene oxide and propylene oxide, at a mass ratio of 50 to 100 : 50 to 0, preferably 70 to 100 : 30 to 0, more preferably 80 to 100 : 20 to 0, and even more preferably 90 to 100 : 10 to 0, for a total molar quantity of 3 to 7 moles, preferably 4 to 7 moles, is addition-polymerized to any one or arbitrary combination of aromatic monoamine compounds selected from the group consisting of aniline, anisidine, aminoacetoanilide, aminophenol, aminobenzoic ethyl ester, isopropoxyaniline, xylidine, cresidine, toluidine, phenetidine, $\alpha$-phenylethylamine, $\beta$-phenylethylamine (phenethylamine), benzylamine, nitroaniline, and isomers thereof.

A second polyol used in the present invention is characterized as being an aromatic polyol that adopts an aromatic diol compound as a starting material, and a quantity of two active hydrogens therefore is preferred. In addition, a polyol where a predetermined amount of alkylene oxide is subjected to addition to an aromatic diol compound whose molecular weight is 90 to 170, or in particular 110 to 161, is preferable in terms of little over-time deterioration of the thermal conductivity rate. A large quantity of active hydrogen would require adding a large molar quantity of alkylene oxide in order to obtain a hydroxyl value suitable for the polyol, and also adversely affect the carbon dioxide barrier property. A high molecular weight would reduce the molecular weight ratio of the aromatic ring in the molecule, and adversely affect the carbon dioxide barrier property in a similar manner.

Results analyzing trends in the case where an aromatic diol compound is used as a starting material for a polyol showed that the most preferable aromatic polyol is one with a hydroxyl value of 230 to 500 mg KOH/g, preferably 300 to 450 mg KOH/g, and where ethylene oxide and propylene oxide, at a mass ratio of 50 to 100: 50 to 0, preferably 70 to 100 : 30 to 0, more preferably 80 to 100 : 20 to 0, and even more preferably 90 to 100 : 10 to 0, for a total molar quantity of 3 to 7 moles, preferably 4 to 7 moles, is addition-polymerized to any one or arbitrary combination of aromatic diol compounds selected from the group consisting of catechol, dihydroxynaphthalene, resorcin, and isomers thereof.

The type of alkylene oxide used in the present invention is most preferably ethylene oxide, and a polyol to which 100% ethylene oxide is added exhibits the least amount of over-time deterioration in the thermal conductivity rate. Increasing the mass ratio of propylene oxide improves foam fluidity, but also results in slight over-time deterioration in the thermal conductivity rate and worsens adhesiveness under a low temperature environment.

Meanwhile, an excessively small total molar quantity of alkylene oxide worsens adhesiveness under a low temperature environment, while an excessively large total molar quantity increases over-time deterioration of the thermal conductivity rate. Furthermore, an excessively small hydroxyl value increases the total molar quantity of alkylene oxide and increases the over-time deterioration of the thermal conductivity rate, while an excessively large hydroxyl value worsens adhesiveness under a low temperature environment.

For these polyols, there is little over-time deterioration in the thermal conductivity rates. The reason behind the slow speed of deterioration is that the ratio of ethylene oxide is particularly high compared to common polyols and the molar quantity of propylene oxide added is particularly small, thus leading to a small ratio of molecular weight excluding the aromatic series. Accordingly, this means the molecular weight ratio of the aromatic portion is high. As a,cvnsequence, the slow speed of deterioration is most likely due to satisfying conditions for achieving an extremely high carbon dioxide barrier property in the rigid polyurethane foam obtained.

On the other hand, for an all water-blown rigid polyurethane foam obtained from a polyether polyol in which an alkylene oxide is subjected to addition to a Mannich condensate, ethylenediamine, sucrose, toluenediamine or the like, either the molecular weight of the aromatic portion in the total molecular weight is small or the molar quantity of alkylene oxide added is large. Therefore, the carbon dioxide barrier property is poor and the over-time deterioration of the thermal conductivity rate is large. However, the deterioration speed of the thermal conductivity rate differs depending on the type of polyol; after 14 to 28 days, some showed relatively good results and all reached equilibrium after 60 days. Note that the molecular weight ratio of the aromatic portion (also generally known as an aromatic concentration, aromaticity, or the like) is represented in formula (1) below.

$$A(\%) = Ma / Mp \times 100 \quad (\text{Formula 1})$$

where,

    A: aromatic concentration

Ma: molecular weight of aromatic portion of polyol initiator
Mp: average molecular weight of polyol

The average molecular weight Mp of the polyol in formula (1) is represented by formula (2) below.

$$Mp = f \times Mk \times 1,000 / OHV \quad \text{(Formula 2)}$$

where,

f: average functional group number of polyols
Mk: molecular weight of KOH
OHV: hydroxyl value of polyol

Focusing on the aromatic concentration, among the rigid polyurethane foam manufactured from polyols using an aromatic monoamine compound and an aromatic diol compound as a starting agent, the aromatic concentration was calculated for the polyol used in rigid polyurethane foam whose thermal conductivity rates exhibited little over-time deterioration. The aromatic concentrations for those calculated were all 20% or more, indicating high aromatic concentrations. On the other hand, for polyols using toluenediamine and bisphenol-A or the like as a starting material, i.e., common aromatic polyols, the aromatic concentration was 20% or less, meaning the aromatic concentration was low, Note that the aromatic concentration for nonaromatic polyols is 0%.

There is most likely a correlation between the aromatic concentration of the polyol and the level of over-time deterioration of the foam thermal conductivity rate. This is based on the ability of such a correlation to explain well one fact obtained from the above knowledge, that is, the reason behind why a lower hydroxyl value of the polyol used leads to greater deterioration in the thermal conductivity rate of the rigid polyurethane foam provided that the same starting material is used for the polyols. However, the aromatic concentration of the polyol alone cannot fully explain the relationship with the level of over-time deterioration of the foam thermal conductivity rate. For example, regardless of whether the polyols used have the same aromatic concentration, an increase in the ratio of propylene oxide in the polyol leads to greater over-time deterioration in the thermal conductivity rate of the rigid polyurethane foam.

Also, regardless of whether the aromatic concentration of the polyol is high and the over-time deterioration of the thermal conductivity rate of the rigid polyurethane foam is small, other performances may suffer. As an example, for a rigid polyurethane foam that uses a polyol whose hydroxyl value is 600 mg KOH/g, aromatic concentration is 41 %, and that which uses aniline as the polyol starting material, there is little over-time deterioration in the thermal conductivity rate; however, such rigid polyurethane foam has poor adhesiveness and lacks practical utility.

The reason for little over-time deterioration of the thermal conductivity rate of the rigid polyurethane foam obtained from a polyol according to the present invention is likely due to the high carbon dioxide barrier property. Based on this reason, it is not particularly necessary that the carbon dioxide of the blowing agent be generated from a reaction between water and isocyanate, and a similar effect can be expected from carbon dioxide in a supercritical, subcritical or liquid state, as well as compressed carbon dioxide. For an all water-blown formulation, the water is used preferably in an amount of 1 to 8 parts by mass based on 100 parts by mass of polyol. For carbon dioxide in a supercritical, subcritical or liquid state, the carbon dioxide is used preferably in an amount of 1 to 8 parts by mass based on 100 parts by mass of polyol.

In addition, performance is not particularly affected by the combined use of carbon dioxide and hydrocarbon or fluorohydrocarbon as a blowing agent. However, when hydrocarbon is used in combination, the premixed raw material is considered hazardous under fire protection laws. When fluorohydrocarbon is used in combination, the non-fluorocarbon property for the sake of the environment is lost. Despite this, if hydrocarbon or fluorohydrocarbon are used in combination, little over-time deterioration in the thermal conductivity rate can be similarly expected, and moreover, the initial value of the thermal conductivity rate can also be lowered. In such case as well, a reduction effect in the amount of hydrocarbon or fluorohydrocarbon used can also be expected, and a hydrocarbon or fluorohydrocarbon blowing agent used in an amount of 5 to 30 parts by mass based on 100 parts by mass of polyol in the formulation is considered adequate.

Note that polyols among the polyols according to the present invention with a high ethylene oxide mass ratio also have high catalytic activity, high strength, and good dimensional stability. Therefore, such polyols are suitable for applications to metal siding material, shutters or the like manufactured using a continuous lamination method. Such polyols are also considered suitable for spray method applications, because there is little over-time deterioration in the thermal conductivity rate regardless of the foam is exposed with no metal face plate or the like, and because there is good adhesiveness under a low temperature environment and extremely low viscosity. Moreover, by appropriately increasing the mass ratio of propylene oxide or by appropriate use in combination with another polyol, it is possible to improve the foam fluidity and achieve a polyol suitable for injection molding.

For a formulation using a polyol according to the present invention, the necessity of adding a combined polyol is conceivable for the purpose of achieving the most suitable reactivity, performance and the like. In such case, commonly used polyols including the following can be added as appropriate: a polyether polyol, a phenolic polyol, a Mannich polyol, and a polyester polyol, such as glycol, glycerin, triethanolamine, pentaerythritol, ethylenediamine, toluenediamine, sorbitol, and sucrose.

However, if the polyol according to the present invention is used in less than an amount of 20 parts by mass based on 100 parts by mass of polyol, the thermal conductivity rate of the rigid polyurethane foam obtained is inadequate. As a consequence, 20 parts by mass or higher must be used. Thus for the effect to be achieved as expected with respect to the over-time deterioration of the thermal conductivity rate, the amount used is preferably 50 parts by mass or higher, more preferably 70 parts by mass or higher, and even more preferably 90 parts by mass or higher.

Among the main components used in the present invention, polymeric MDI is preferably used for polyisocyanate; however, polyisocyanate using tolylene diisocyanate (TDI), diphenylmethane diisocyanate (MDI) or the like as a prepolymer for a portion thereof may also be used without adverse effect.

A urethane catalyst used in the present invention can adopt a metal catalyst and a class 3 amine compound generally used in rigid polyurethane foam or the like. Other auxiliary additives that can be adopted include normal foam stabilizers, flame retardants and the like that are generally used.

A mixture including a polyol, a blowing agent, and auxiliary additives such as a catalyst and a flame retardant can be mixed to achieve a premixed raw material by using an electrically operated mixer or other commonly known method such as a static mixer. The obtained premixed raw material can then be mixed with polyisocyanate using an existing blowing machine or a mixer, thereby manufacturing rigid polyurethane foam. The present invention is not particularly limited by the type of blowing machine or mixer used for the rigid polyurethane foam.

Examples

Hereinafter, examples will be used to give a more specific description of the present invention. However, the present invention is not particularly limited to these examples. Furthermore, although the performance of panel foam is offered as a preferred example in the present example, the application of rigid polyurethane foam obtained according to a method of the present invention is not particularly limited to panel foam.

The performance of a panel foam specified in comparative examples 1 to 3 and examples 1 to 3 described later is prepared and measured in the order below. Main components of a mass based on their respective formulations were placed in a paper cup with an internal volume of 500 cm$^3$ and mixed so as to achieve adequate uniformity to obtain a premixed raw material. The raw material temperature of the premixed raw material was matched to 20°C. Millionate MR-200, a polymeric isocyanate manufactured by Nippon Polyurethane Industry Co., Ltd. whose raw material was prematched to 20°C, was injected into the premixed raw material. This was then agitated for 4 sec at a speed of 7,000 rpm using an electrically powered mixer manufactured by Tokushu Kika Kogyo Co., Ltd.

An aluminum mold with a height of 49 cm, a width of 42 cm, and a thickness of 2.5 cm, to which a mold releasing sheet made of polyethylene was pre-applied, is lemperature-controlled to 30°C by an electric heater in advance. The above mixture was then promptly charged therein and blown.

Cream time is defined as the time when the mixture charged in the mold starts to react and begins to rise; and gel time is defined as the time when a thread-like gelled substance is drawn out by a glass stick after the glass stick has been inserted into the mixture foam in the paper cup and then pulled out. These times were recorded as reactivity.

First, the upper mold frame is removed, and panel foam is prepared by freely injecting foam into the upper mold. After 10 min, the obtained rigid polyurethane foam is removed and cut to a height of 49 cm, which is followed by measuring the foam mass. Density is calculated from the internal volume of the mold, and used as an open panel density.

Next, a frame with two air vent openings having 5-mm diameters is provided in the upper mold. An amount of raw material calculated so as to achieve 120% of the open panel density is charged into the same mold and blown. A 5 cm × 5 cm iron plate whose panel center portion has a 2- to 3-mm hole is then applied to the mold release sheet, and subsequently self adheres to the blown rigid polyurethane foam.

The rigid polyurethane foam obtained after 10 min was removed, and the mold releasing sheet was peeled off. Foam friability was then judged through touch perception. Friability for particularly brittle foam was judged as "very high"; friability for brittle foam was judged as "some", friability for slightly brittle foam was judged as "slight"; friability for foam with no brittleness was judged as "trace"; and friability for foam with no brittleness at all was judged as "none". Thereafter, a screw was promptly screwed into the hole in the center portion of the iron plate. Using a push-pull gauge manufactured by Aikoh Engineering Co., Ltd., the adhesion force (kg) of the iron plate with respect to the rigid polyurethane foam was measured. The following day after blowing, the mass of the panel foam was measured, and the density was calculated from the internal volume of the mold to find the panel total density. A ratio of the panel total density and the open panel density was the pack ratio. Furthermore, a 20 cm × 20 cm sample approximately 1.6 cm in thickness was cut. An actual measurement was made of the foam mass and size to calculate a core density. Using the sample, the thermal conductivity rate was measured by an Autoλ HC-074 manufactured by Eko Instruments Co., Ltd. and set as the initial value of the thermal conductivity rate. The sample was then left under room temperature and afterwards, the thermal conductivity rate of the same sample was measured again after 14, 28, 60, and in some cases, 90 days. The ratio with the initial value was subsequently calculated. From the remaining panel, four samples with a length of approximately 30 cm, a width of approximately 7 cm, and a thickness of approximately 2.5 cm were cut. The thickness at the beginning was measured by a dial caliper gauge LO-1 manufactured by Ozaki Mfg. Co., Ltd., and three samples were thereafter left under atmospheres at respective temperatures of-20°C, 70°C, and 50°C with a relative humidity of 95%. After the 28th day, the maximum amounts of dimensional change were measured to calculate a dimensional change rate. Three test pieces 5 cm in diameter were cut from the remaining sample, and the compression strength was measured by a Tensilon UCT-2.5T manufactured by Orientec Co., Ltd.

(Comparative Example 1)

For a formulation (1) according to comparative example 1 in Table 1, 112 g of Hycel M-595C, a rigid polyurethane raw material manufactured by Toho Chemical Industry Co., Ltd., was used, and 129 g of Millionate MR-200 manufactured by Nippon Polyurethane Industry Co., Ltd. was poured therein and agitated so as to prepare panel foam from the M-595.
Likewise, for a formulation (2): Hycel e-60C rigid polyurethane raw material manufactured by Toho Chemical Industry Co., Ltd. / Millionate MR-200 manufactured by Nippon Polyurethane Industry Co., Ltd. =140 / 110 g. For a formulation (3): Hycel MR-284C rigid polyurethane raw material manufactured by Toho Chemical Industry Co., Ltd. / MR-200 = 146 / 81 g. For a formulation (4): Hycel M-330C rigid polyurethane raw material manufactured by Toho Chemical Industry Co., Ltd. / MR-200 =167/103 g. These raw materials were poured and agitated to prepare panel foam from the e-60C, MR-284, and M-330, respectively.
The formulations (1) and (2) of comparative example 1 use HCFC-141b and HFC-245fa, respectively. That is, both use a chlorofluorocarbon blowing agent. The polyols used in both these formulations are sucrose, aliphatic amine, and the like, but a polyol of the present invention is not used. These formulations have already seen application for electrical equipment, and M-595 in particular has already been used for refrigeration showcases. The initial value, over-time deterioration, and the like of the thermal conductivity rate for this formulation was designated as a representative example of the values for the HCFC-141b formulation.
The formulations (3) and (4) of comparative example 1 are all water-blown raw materials manufactured by Toho Chemical Industry Co., Ltd. and are already used in the market. The polyols used in the formulations are sucrose, aliphatic amine, and the like, but a polyol of the present invention is not used. The initial value, over-time deterioration, and the like of the thermal conductivity rate from these formulations were designated as representative examples of common all water-blown formulations.

[Table 1]

| Comparative Example 1 | | | | |
|---|---|---|---|---|
| 1. Formulation name | M-595 | e-60 | MR-284 | M-330 |
| | (1) | (2) | (3) | (4) |
| Blowing agent | HCFC-141b | HFC-245fa | All water | All water |
| 2. Reactivity     Cream time (see) | 14 | 8 | 16 | 10 |
|     Gel time (see) | 93 | 51 | 83 | 42 |
| 3. Open panel density (kg/m$^3$) | 33.4 | 33.7 | 30.9 | 36.2 |
| 4. Pack panel performance (pack ratio %) | 122 | 123 | 120 | 123 |
| Panel total density (kg/m$^3$) | 40.7 | 41.6 | 37.2 | 44.6 |
| Core density (kg/m$^3$) | 33.4 | 38.5 | 34.7 | 42.5 |
| Compression strength (kg/cm$^2$) | 1.18 | 1.45 | 1.44 | 1.45 |
| Friability | Trace | None | Some | None |
| Adhesion force (kg) | 5.7 | 7.5 | 2.0 | 4.5 |
| Thermal cond. rate initial val. λ24 (W/mK) | 0.0205 | 0.0208 | 0.0239 | 0.0228 |
| HCFC-141b formulation (5951) ratio (%) | 100 | 101 | 117 | 111 |

(continued)

| Comparative Example 1 | | | | |
| --- | --- | --- | --- | --- |
| 1. Formulation name | M-595 | e-60 | MR-284 | M-330 |
| | (1) | (2) | (3) | (4) |
| Thermal conductivity rate after 14 days | 0.0232 | 0.0220 | 0.0317 | 0.0277 |
| Fost-l4th day / initial value ratio (%) | 113 | 106 | 133 | 122 |
| Thermal conductivity rate after 28 days | 0.0246 | 0.023 | 0.0332 | 0.0317 |
| Post-28th day / initial value ratio (%) | 120 | 112 | 139 | 139 |
| Thermal conductivity rate after 60 days | 0.0262 | 0.0245 | 0.0334 | 0.0326 |
| Post-60th day / initial value ratio (%) | 128 | 118 | 140 | 143 |
| Thermal conductivity rate after 90 days | 0.0271 | 0.0253 | 0.0334 | 0.0326 |
| Post-90th day / initial value ratio (%) | 132 | 122 | 140 | 143 |
| -20°C $\times$ 2 wks (t%) | 0 | 0 | 0 | 0 |
| 70°C $\times$ 2 wks (t%) | 1.9 | -0.4 | -3.9 | -3.4 |
| 50°C, 95%RH $\times$ 2 wks (t%) | 1.2 | -4.3 | -17.7 | -20.2 |
| (1) HCFC-141b-blown rigid polyurethane raw material manufactured by Toho Chemical Industry Co., Ltd. <br> (2) HFC-245fa-blown rigid polyurethane raw material manufactured by Toho Chemical Industry Co., Ltd. <br> (3) All water-blown rigid polyurethane raw material manufactured by Toho Chemical Industry Co., Ltd. <br> (4) All water-blown rigid polyurethane raw material manufactured by Toho Chemical Industry Co., Ltd. | | | | |

A comparison was made of the pack panel performance of the formulations (1) and (2) whose blowing agents were HCFC-141b and HFC-245fa, respectively, shown in Comparative Example 1 and the all water-blown formulations (3) and (4) already on the market. Regarding adhesion force at a jig temperature of 30°C, the HCFC-141 b-blown formulation (I) and the HFC-245fa-blown formulation (2) showed good performances at 5.7 kg and 7.5 kg, respectively. However, the water-blown formulations (3) and (4) were slightly low at 2.0 to 4.5 kg. The adhesion force correlates with friability, and is high for the formulations without friability. In addition, the initial value of the thermal conductivity rate for the HCFC-141 b formulations (1) is 0.0205 W/mK is comparable with the HFC-245fa formulation (2) at 0.0208 W/mK. However, the thermal conductivity rate after 60 days respectively becomes 0.0262 W/mK and 0.0245 W/mK, with the HFC-245fa formulation (2) showing slightly better performance. A comparison with the initial value of the thermal conductivity rate in such case is 128% for the HCFC-141 formulation (1), and 118% for the HFC-245fa formulation (2). On the other hand, the initial value of the thermal conductivity rate for the all water-blown formulations are 0.0239 W/mK for formulation (3), and 0.0228 W/mK for formulation (4). The ratios therefor are 111 to 117%, which is 10 to 20% worse than that for the HCFC-141b formulation (1). Furthermore, in terms of the over-time deterioration of the thermal conductivity rate, the thermal conductivity rate after 60 days for both water-blown formulations settled around 0.033 W/mK and reached equilibrium. It was also found that the ratio with the initial value of thermal conductivity rate was around 140 to 145%, indicating that deterioration greatly increased. Meanwhile, after 90 days, the HCFC-141 b-blown formulation (1) experienced further deterioration in its thermal conductivity rate and did not reach equilibrium, while the all water-blown formulations had already reached equilibrium. Compared to the HCFC-141b- and HFC-245fa-blown foams, the thermal conductivity rate of the carbon dioxide-blown foam experiences greater over-time deterioration. This is likely due to the fact that carbon dioxide easily permeates from cells and is subsequently replaced with air. In addition, the over-time deterioration of the thermal conductivity rate of the HFC-245fa-blown foam is somewhat less than that of the HCFC-141b-blown foam. This is likely due to the fact that the molecular weight of the HFC-245fa is greater than that of HCFC-141 b, and thus the cell membrane is not as conducive to permeability.

Looking at the dimensional change rate after 28 days under an atmosphere with a temperature of 50°C and a relative humidity of 95%, the formulations (1) and (2) had small change rates of-4.3 to 1.2%. Meanwhile, the all water-blown formulations (3) and (4) had large change rates of-17.7 to -20.2%, indicating that the dimensional stability had decreased.

(Comparative Example 2)

In comparative example 2 shown in Table 2, panels were prepared using the following formulations: a formulation (5) having a ratio of 4.88 parts by mass of water, 0.27 part by mass of TMHDA (trimethylhexanediamine), 1.5 part by mass of SZ-1718 manufactured by Dow Corning Toray Co., Ltd. (formerly Nippon Unicar Co., Ltd.), and 164.5 parts by mass of Millionate MR-200 manufactured by Nippon Polyurethane Industry Co., Ltd. based on 100 parts by mass of a Mannich polyol DK-3810 manufactured by Dai-Ichi Kogyo Seiyaku Co., Ltd. so as to achieve a total mass of 300 g; a formulation (6) having a ratio of 5.13 parts by mass of water, 0.57 part by mass of TMHDA, 1.5 part by mass of SZ-1718, and 178 parts by mass of MR-200 based on 100 parts by mass of a Toho polyol QB-501 manufactured by Toho Chemical Industry Co., Ltd. so as to achieve a total mass of 300 g; a formulation (7) having a ratio of 4.65 parts by mass of water, 0.90 part by mass of TMHDA, 1.5 part by mass of SZ-1718, and 151.5 parts by mass of MR-200 based on 100 parts by mass of Bisol 4EN manufactured by Toho Chemical Industry Co., Ltd. so as to achieve a total mass of 300 g; and a formulation (8) having a ratio of 4.80 parts by mass of water, 1.33 part by mass of TMHDA, 1.5 part by mass of SZ-1718, and 159.3 parts by mass of MR-204 based on 100 parts by mass of a Toho polyol AR-3502 manufactured by Toho Chemical Industry Co., Ltd. so as to achieve a total mass of 300 g.

The formulation (5) in comparative example 2 is a Mannich polyol; the formulation (6) is a polyol in which ethylene oxide and propylene oxide are subjected to addition to an ethylene amine at a mass ratio of 45/55, a molar quantity of 5/5, and a hydroxyl value of 450; the formulation (7) is a polyol in which ethylene oxide and propylene oxide are subjected to addition to bisphenol-A at a mass ratio of 100/0, a molar quantity of 4/0, and a hydroxyl value of 280; and the formulation (8) is a polyol in which ethylene oxide and propylene oxide are subjected to addition to a toluenediamine at a mass ratio of 30/70, a molar quantity of 4/6, and a hydroxyl value of 350. All of the above are common polyols. Thus, the initial value, over-time deterioration, and the like of the thermal conductivity rate from these formulations were designated as representative examples to be used for comparison against a polyol according to the present invention.

[Table 2]

| Comparative Example 2 | | | | |
|---|---|---|---|---|
| 1. Polyol name | DK-3810 | QB-501 | 4EN | AR-3502 |
| | (5) | (6) | (7) | (8) |
| Type | Mannich | EDA | Bisphenol | TDA |
| Hydroxyl value (mgKOH/g) | 315 | 450 | 280 | 350 |
| Viscosity (mPa·s) (25°C) | 1.200 | 1.200 | 14,000 | 5,600 |
| Aromatic concentration (%) | Unknown | 0 | 19 | 12 |
| 2. Formulation polyol pbw. | 100 | 100 | 100 | 100 |
| Water (=1.80% in formulation) | 4.88 | 5.13 | 4.65 | 4.80 |
| TMHDA (% in formulation) | 0.27(0.10) | 0.57(0.20) | 0.90 (0.35) | 1.33(0.50) |
| SZ-1718 | 1.5 | 1.5 | 1.5 | 1.5 |
| MR-200(NCO Index=1.10) | 164.5 | 178.0 | 151.5 | 159.3 |
| 3. Reactivity          Cream time (sec) | 8 | 8 | 14 | 14 |
| Gel time (sec) | 23 | 23 | 27 | 52 |
| 4. Open panel density (kg/m$^3$) | 52.5 | 42.0 | 53.4 | 43.4 |
| 5. Pack panel performance (pack ratio %) | 120 | 122 | 121 | 121 |
| Panel total density (kg/m$^3$) | 62.9 | 51.4 | 64.7 | 52.6 |
| Core density (kg/m$^3$) | 49.5 | 43.5 | 51.2 | 46.8 |
| Compression strength (kg/cm$^2$) | 2.69 | 1.96 | 1.70 | 1.90 |
| Friability | None | None | Some | Some |

(continued)

| Comparative Example 2 | | | | |
|---|---|---|---|---|
| 1. Polyol name | DK-3810 | QB-501 | 4EN | AR-3502 |
| | (5) | (6) | (7) | (8) |
| Adhesion force (kg) | 5.5 | 7.5 | 0.7 | 1.3 |
| Thermal cond. rate initial val. $\lambda$ 24 (W/mK) | 0.0227 | 0.0229 | 0.0225 | 0.0224 |
| Thermal conductivity rate after 14 days | 0.0262 | 0.0251 | 0.0247 | 0.0249 |
| Post-14th day / initial value ratio (%) | 115 | 110 | 110 | 111 |
| Thermal conductivity rate after 28 days | 0.0300 | 0.0273 | 0.0267 | 0.0247 |
| Post-28th day / initial value ratio (%) | 132 | 119 | 119 | 122 |
| Thermal conductivity rate after 60 days | 0.0323 | 0.0308 | 0.0307 | 0.0316 |
| Post-60th day / initial value ratio (%) | 142 | 134 | 137 | 141 |
| Thermal conductivity rate after 90 days | 0.0323 | 0.0323 | 0.0323 | 0.0321 |
| Post-90th day / initial value ratio (%) | 142 | 141 | 144 | 143 |
| -20°C $\times$ 2 wks (t%) | 0 | 0 | 0 | 0 |
| 70°C $\times$ 2 wks (t%) | -2.8 | -3.2 | -4.2 | -2.5 |
| 50°C, 95%RH $\times$ 2 wks (t%) | -2.2 | -0.4 | +3.3 | -3.0 |
| (5) Mannich polyol manufactured by Dai-Ichi Kogyo Seiyaku Co., Ltd. (6) Ethylenediamine polyol manufactured by Toho Chemical Industry Co., Ltd. (7) Bisphenol-A polyol manufactured by Toho Chemical Industry Co., Ltd. (8) Toluenediamine polyol manufactured by Toho Chemical Industry Co., Ltd. | | | | |

All formulations in Comparative Example 2 had small cell diameters, and showed relatively good initial values for the thermal conductivity rate from 0.0224 to 0.0229 W/mK. In terms of the over-time deterioration of the thermal conductivity rate, after 60 days all formulations practically reached equilibrium at around 0.032 W/mK, and ratios with the initial values were also similar at 140 to 145%. Similar to the all water-blown formulations in comparative example 1. as a result of carbon dioxide permeating from cells and being replaced with air, there was no large difference between the carbon dioxide barrier performances of the obtained foams based on data after 14 and 28 days; however, some differences were found in the deterioration speed of the thermal conductivity rates up to equilibrium. Although the data is not particularly included here, this trend resembled polyols such as sugar, pentaerythritol, triethanolamine, toluenediamine, etc. or the like in which the mass ratio of ethylene oxides was varied.

The Mannich polyol of formulation (5) and the ethylenediamine polyol of formulation (6) in Comparative Example 2 had no friability at the jig temperature of 30°C, and showed high and good adhesion force at the jig temperature of 30°C. Meanwhile, the bisphenol-A polyol of formulation (7) and the toluenediamine polyol of formulation (8) both had good adhesiveness. Regarding foam fluidity, the Mannich polyol and the bisphenol-A polyol were especially poor, but both had good dimensional stability against moisture and heat after 28 days.

(Comparative Example 3)

In Comparative Example 3 shown in Table 3, panels were prepared using the following formulations: a formulation (9) having a ratio of 5.16 parts by mass of water, 1.72 part by mass of TMHDA, 1.5 part by mass of SZ-1718 manufactured by Dow Corning Toray Co., Ltd. (formerly Nippon Unicar Co., Ltd.), and 178.5 parts by mass of Millionate MR-200 manufactured by Nippon Polyurethane Industry Co., Ltd. based on 100 parts by mass of a Toho polyol AB-323 manufactured by Toho Chemical Industry Co., Ltd. so as to achieve a total mass of 300 g; a formulation (10) having a ratio of 6.98 part by mass of water, 0.77 part by mass of TMHDA, 1.5 part by mass ofSZ-1718, and 273.5 parts by mass of MR-200 based on 100 parts by mass of a Toho polyol AE-190 manufactured by Toho Chemical Industry Co., Ltd. so as to achieve a total mass of 300 g; and a formulation (11) having a ratio of 4.09 parts by mass of water, 0.80 part by mass of TMHDA, 1.5 part by mass of SZ-1718, and 120.9 parts by mass of MR-200 based on 100 parts by mass of a Toho polyol AB-560 manufactured by Toho Chemical Industry Co., Ltd. so as to achieve a total mass of 300 g.

The AB-323 of formulation (9) in comparative example 3 is a polyol in which ethylene oxide and propylene oxide are subjected to addition to aniline at a mass ratio of 30/70, a molar quantity of 1.5/2.7, and a hydroxyl value of 350; the AE-190 of formulation (10) is a polyol in which ethylene oxide and propylene oxide are subjected to addition to aniline at a mass ratio of 100/0, a molar quantity of 2.0/0, and a hydroxyl value of 600; and the AB-560 of formulation (11) is a polyol in which ethylene oxide and propylene oxide are subjected to addition to aniline at a mass ratio of 40/60, a molar quantity of 4.8/1.2, and a hydroxyl value of 480. All of the above are aniline polyols, but do not fall in the scope of the present invention.

[Table 3]

| Comparative Example 3 | | | |
|---|---|---|---|
| | AB-323 | AE-190 | AB-560 |
| | (9) | (10) | (11) |
| Type | Aniline | Aniline | Aniline |
| Hydroxyl value (mg KOH/g) | 350 | 600 | 200 |
| Viscosity (mPa·s) (25°C) | 1.200 | 320 | 480 |
| Aromatic concentration (%) | 24 | 41 | 14 |
| EO/PO mass ratio (%) | 30/70 | 100/0 | 40/60 |
| EO/PO moles | 1.5/2.7 | 2.0/0 | 4.8/1.2 |
| 2. Formulation polyol pbw. | 100 | 100 | 100 |
| Water (=1.80% in formulation) | 5.16 | 6.89 | 4.09 |
| TMHDA (% in formulation) | 1.72 (0.60) | 0.77(0.20) | 0.80 (0.35) |
| sz-1718 | 1.5 | 1.5 | 1.5 |
| MR-200 (NCO Index=1.10) | 178.5 | 273.5 | 120.9 |
| 3. Reactivity        Cream time (see) | 9 | 11 | 10 |
| Gel time (sec) | 40 | 23 | 33 |
| 4. Open panel density (kg/m$^3$) | 42.2 | 50.3 | 43.5 |
| 5. Pack panel performance (pack ratio %) | 120 | 121 | I23 |
| Panel total density (kg/m$^3$) | 50.6 | 60.9 | 53.5 |
| Core density (kg/m$^3$) | 46.6 | 53 | 48.2 |
| Compression strength (kg/cm$^2$) | 2.33 | 1.55 | 1.67 |
| Friability | Very high | Very high | None |
| Adhesion force (kg) | 0 | 0 | 10.8 |
| Thermal cond. rate initial val. $\lambda$ 24 (W/mK) | 0.0224 | 0.0225 | 0.0225 |
| Thermal conductivity rate after 14 days | 0.0260 | 0.0243 | 0.0250 |
| Post-14th day / initial value ratio (%) | 111 | 108 | 111 |
| Thermal conductivity rate after 28 days | 0.0271 | 0.0250 | 0.0268 |
| Post-28th day / initial value ratio (%) | 121 | 111 | 119 |
| Thermal conductivity rate after 60 days | 0.0314 | 0.0266 | 0.0315 |
| Post-60th day / initial value ratio (%) | 140 | 118 | 140 |
| -20°C × 2 wks (t%) | 0 | 0 | 0 |
| 70°C × 2 wks (t%) | 0.3 | 0.4 | 2.5 |

(continued)

| Comparative Example 3 | | | |
|---|---|---|---|
| | AB-323 | AE-190 | AB-560 |
| | (9) | (10) | (11) |
| Type | Aniline | Aniline | Aniline |
| 50°C, 95%RH × 2 wks (t%) | 2.5 | 1.5 | 15.2 |
| (9) Aniline polyol manufactured by Toho Chemical Industry Co., Ltd.<br>(10) Aniline polyol manufactured by Toho Chemical Industry Co., Ltd.<br>(11) Aniline polyol manufactured by Toho Chemical Industry Co., Ltd. | | | |

All formulations in comparative example 3 showed relatively good initial values for the thermal conductivity rate from 0.0224 to 0.0225 W/mK. In terms of the over-time deterioration of the thermal conductivity rate, foam from both the AB-323 of formulation (9) and the AB-560 of formulation (11), whose mass ratios of ethylene oxide are less than 50%, reached equilibrium after 60 days at around 0.032 W/mK. Ratios with the initial values were also similar to foam from polyols of the other comparative examples at 140%. Foam from the AE-190 of formulation (10) also showed good performance regarding over-time deterioration of the thermal conductivity rate, similar to aniline polyols within the scope of the present invention. Therefore, in addition to the type of polyol initiator, the type of alkylene oxide, the mass ratio, and the total molar quantity have a significant influence on the effect of the carbon dioxide barrier effect, which is related to the over-time deterioration of the thermal conductivity rate.

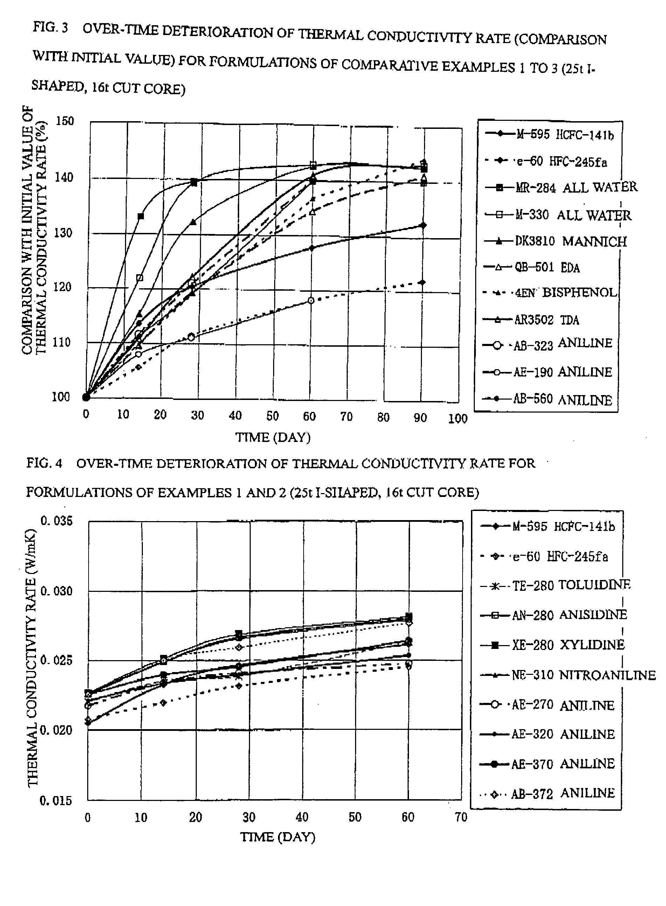

The aniline polyol of formulation (11) in comparative example 3 had no friability at the jig temperature of 30°C, and showed high and good adhesion force at the jig temperature of 30°C. Meanwhile, the aniline polyols of formulations (9) and (11) both had high friability and poor adhesiveness. In particular, the formulation (10) had very high friability, which makes it unsuitable for use despite its good performance in terms of over-time deterioration of the thermal conductivity rate. Regarding foam fluidity, all of the polyols had good dimensional stability against moisture and heat after 28 days. Graphs in FIGS. 2 and 3 show the over-time deterioration of the thermal conductivity rate and the ratio with the initial value for the formulations in comparative examples 1 to 3.

(Example 1)

In example 1 shown in Table 4, panels were prepared using the following formulations: a formulation (12) having a ratio of 5.50 parts by mass of water, 0.61 part by mass of TMHDA, 1.5 part by mass of SZ-1718 manufactured by Dow Corning Toray Co., Ltd. (formerly Nippon Unicar Co., Ltd.), and 197.0 parts by mass of Millionate MR-200 manufactured by Nippon Polyurethane Industry Co., Ltd. based on 100 parts by mass of a Toho polyol TE-280 manufactured by Toho Chemical Industry Co., Ltd. so as to achieve a total mass of 300 g; a formulation (13) having a ratio of 5.36 parts by mass of water, 1.04 part by mass of TMHDA, 1.5 part by mass of SZ-1718, and 189.7 parts by mass of MR-200 based on 100 parts by mass of a Toho polyol AN-280 manufactured by Toho Chemical Industry Co., Ltd. so as to achieve a total mass of 300 g; a formulation (14) having a ratio of 4.36 parts by mass of water, 1.04 part by mass of TMHDA, 1.5 part by mass of SZ-1718, and 189.7 parts by mass of MR-200 based on 100 parts by mass of a Toho polyol XE-280 manufactured by Toho Chemical Industry Co., Ltd. so as to achieve a total mass of 300 g.; and a formulation (15) having a ratio of 5.43 parts by mass of water, 1.04 part by mass of TMHDA, 1.5 part by mass of SZ-1718, and 189.7 parts by mass of MR-200 based on 100 parts by mass of a Toho polyol NE-310 manufactured by Toho Chemical Industry Co., Ltd. so as to achieve a total mass of 300 g.

The formulation (12) in example 1 is a polyol in which ethylene oxide and propylene oxide are subjected to addition to o-toluidine at a mass ratio of 100/0, a molar quantity of 4.0/0, and a hydroxyl value of 400; the formulation (13) is a polyol in which ethylene oxide and propylene oxide are subjected to addition to anisidine at a mass ratio of 100/0, a molar quantity of 4.0/0, and a hydroxyl value of 380; the formulation (14) is a polyol in which ethylene oxide and propylene oxide are subjected to addition to xylidine at a mass ratio of 100/0, a molar quantity of 4.0/0, and a hydroxyl value of 380; and the formulation (15) is a polyol in which ethylene oxide and propylene oxide are subjected to addition to nitroaniline at a mass ratio of 100/0, a molar quantity of 4.0/0, and a hydroxyl value of 380- All of the above are aromatic monoamine polyols whose configuration resembles that of aniline.

(Example 2)

In example 2 shown in Table 5, panels were prepared using the following formulations: a formulation (16) having a ratio of 5.60 parts by mass of water, 1.09 part by mass of TMHDA, 1.5 part by mass of SZ-1718 manufactured by Dow Corning Toray Co., Ltd. (formerly Nippon Unicar Co., Ltd.), and 203.1 parts by mass of Millionate MR-200 manufactured by Nippon Polyurethane Industry Co., Ltd. based on 100 parts by mass of a Toho polyol AE-270 manufactured by Toho Chemical Industry Co., Ltd. so as to achieve a total mass of 300 g; a formulation (17) having a ratio of 5.15 parts by mass of water, 1.00 part by mass of TMHDA, 1.5 part by mass of SZ-1718, and 178.2 parts by mass of MR-200 based on 100 parts by mass of a Toho polyol AE-320 manufactured by Toho Chemical Industry Co., Ltd. so as to achieve a total mass of 300 g; a formulation (18) having a ratio of 4.78 parts by mass of water, 0.53 part by mass of TMHDA, 1.5 part by mass of SZ-1718, and 158.9 parts by mass of MR-200 based on 100 parts by mass of a Toho polyol AE-370 manufactured by Toho Chemical Industry Co., Ltd. so as to achieve a total mass of 300 g.; and a formulation (19) having a ratio of 4.61 parts by mass of water, 0.77 part by mass of TMHDA, 1.5 part by mass of SZ-1718, and 149.5 parts by mass of MR-200 based on 100 parts by mass of a Toho polyol AB-372 manufactured by Toho Chemical Industry Co., Ltd. so as to achieve a total mass of 300 g.

The AE-270 of formulation (16) in Example 2 is a polyol in which ethylene oxide and propylene oxide are subjected to addition to aniline at a mass ratio of 100/0, a molar quantity of 4.0/0, and a hydroxyl value of 415; the AE-320 of formulation (17) is a polyol in which ethylene oxide and propylene oxide are subjected to addition to aniline at a mass ratio of 100/0, a molar quantity of 5.3/0, and a hydroxyl value of 350; the AE-370 of formulation (18) is a polyol in which ethylene oxide and propylene oxide are subjected to addition to aniline at a mass ratio of 100/0, a molar quantity of 6.4/0, and a hydroxyl value of 300; and the AB-372 of formulation (19) is a polyol in which ethylene oxide and propylene oxide are subjected to addition to aniline at a mass ratio of 90/10, a molar quantity of 5.7/0.5, and a hydroxyl value of 300. All af the above are aniline polyols.

[Table 4]

| Example 1 | | | | |
|---|---|---|---|---|
| 1. Polyol name | TE-280 | AN-280 | XE-280 | NE-310 |
| | (12) | (13) | (14) | (15) |
| Type | Toluidine | Anisidine | Xylidine | Nitroaniline |
| Hydroxyl value (mg KOH/g) | 400 | 380 | 380 | 380 |
| Viscosity (mPa·s) (25°C) | 320 | 1000 | 1200 | 1100 |
| Aromatic concentration (%) | 27 | 26 | 25 | 26 |
| EO/PO mass ratio (%) | 100/0 | 100/0 | 100/0 | 100/0 |
| EO/PO moles | 4.0/0 | 4.0/0 | 4.0/0 | 4.0/0 |
| 2. Formulation polyol pbw. | 100 | 100 | 100 | 100 |
| Water (=1.80% in formulation) | 5.50 | 5.36 | 5.36 | 5.43 |
| TMHDA (% in formulation) | 0.61 (0.20) | 1.04 (0.35) | 1.04 (0.35) | 1.04 (0.35) |
| SZ-1718 8 | 1.5 5 | 1.5 | 1.5 5 | 1,5 |
| MR-200(NCO Index=1.10) | 197.0 | 189.7 | 189.7 | 189.7 |
| 3. Reactivity — Cream time (sec) | 16 | 13 | 12 | 13 |
| Gel time (sec) | 40 | 28 | 29 | 33 |
| 4. Open panel density (kg/m$^3$) | 50.1 | 48.8 | 49.1 | 48.0 |
| 5. Pack panel performance (pack ratio %) | 117 | 122 | 122 | 120 |
| Panel total density (kg/m$^3$) | 58.6 | 59.5 | 59.9 | 57.6 |
| Core density (kg/m$^3$) | 48.1 | 52.4 | 52.1 | 50.7 |
| Compression strength (kg/cm$^2$) | 2.00 | 2.15 | 1.95 | 2.10 |
| Friability | slight | Slight | Slight | Slight |
| Adhesion force (kg) | 3,0 | 3.3 | 4.2 | 3.5 |
| Thermal cond. rate initial val, λ 24 (W/mK) | 0.0220 | 0.0225 | 0.0227 | 0.0227 |

(continued)

| Example 1 | | | | |
|---|---|---|---|---|
| 1. Polyol name | TE-280 | AN-280 | XE-280 | NE-310 |
| | (12) | (13) | (14) | (15) |
| Type | Toluidine | Anisidine | Xylidine | Nitroaniline |
| Thermal conductivity rate after 14 days | 0.0235 | 0.0249 | 0.0252 | 0.0249 |
| Post-14th day / initial value ratio (%) | 107 | 110 | 111 | 110 |
| Thermal conductivity rate after 28 days | 0.0238 | 0.0266 | 0.0269 | 0.0265 |
| Post-28th day / initial value ratio (%) | 108 | 118 | 118 | 117 |
| Thermal conductivity rate after 60 days | 0.0263 | 0.0280 | 0.0281 | 0.0279 |
| Post-60th day / initial value ratio (%) | 120 | 124 | 124 | 123 |
| -20°C $\times$ 2 wks (t%) | 0 | 0 | 0 | 0 |
| 70°C$\times$2wks(t%) | -7.7 | -2.5 | -3.7 | 0.4 |
| 50°C, 95%RH $\times$ 2 wks (t%) | 4.5 | -5.2 | -4.4 | -4.1 |
| (12) Polyol manufactured by Toho Chemical Industry Co., Ltd.<br>(13) Polyol manufactured by Toho Chemical Industry Co., Ltd.<br>(14) Polyol manufactured by Toho Chemical Industry Co., Ltd.<br>(15) Polyol manufactured by Toho Chemical Industry Co., Ltd. | | | | |

[Table 5]

| Example 2 | | | | |
|---|---|---|---|---|
| 1.Polyol name | AE-270 | AE-320 | AE-370 | AB-372 |
| | (16) | (17) | (18) | (19) |
| Type | Aniline | Aniline | Aniline | Aniline |
| Hydroxyl value (mg KOH/g) | 415 | 350 | 300 | 300 |
| Viscosity (mPa·s) (25°C) | 720 | 670 | 440 | 300 |
| Aromatic concentration (%) | 28 | 24 | 20 | 20 |
| EO/PO mass ratio (%) | 100/0 | 100/0 | 100/0 | 90/10 |
| EO/PO moles | 4.0/0 | 5.3/0 | 6.4/0 | 5.7/0.5 |
| 2. Formulation polyol pbw. | 100 | 100 | 100 | 100 |
| Water (=1.80% in formulation) | 5.60 | 5.15 | 4.78 | 4.61 |
| TMHDA (% in formulation) | 1.09(0.35) | 1.00 (0.35) | 0.53 (0.20) | 0.77 (0.30) |
| SZ-1718 | 1.5 | 1.5 | 1.5 | 1.5 |
| MR-200 (NCO Index=1.10) | 203.1 | 178.2 | 158.9 | 149.5 |
| 3. Reactivity          Cream time (sec) | 12 | 11 | 16(39) | 15 (30) |
| Gel time (sec) | 24 | 23 | 41 | 51 |
| 4. Open panel density (kg/m$^3$) | 46.8 | 47.4 | 49.9 | 47.4 |
| 5. Pack panel performance (pack ratio %) | 118 | 120 | 123 | 126 |
| Panel total density (kg/m$^3$) | 55.2 | 57.1 | 61.3 | 59.8 |
| Core density (kg/m$^3$) | 46.7 | 48.2 | 52.1 | 53.2 |

(continued)

| Example 2 | | | | |
|---|---|---|---|---|
| Compression strength (kg/cm$^2$) | 2.04 | 2.29 | 2.04 | 1.96 |
| Friability | Slight | Trace | None | Trace |
| Adhesion force (kg) | 4.5 | 6.7 | 10.8 | 7.5 |
| Thermal cond. rate initial val. $\lambda$ 24 (W/mK) | 0.0217 | 0.0221 | 0.0225 | 0.0225 |
| Thermal conductivity rate after 14 days | 0.0234 | 0.0234 | 0.0239 | 0.0250 |
| Post-14th day / initial value ratio (%) | 108 | 106 | 106 | 111 |
| Thermal conductivity rate after 28 days | 0.0241 | 0.0240 | 0.0245 | 0.0259 |
| Post-28th day / initial value ratio (%) | 111 | 108 | 109 | 115 |
| Thermal conductivity rate after 60 days | 0.0248 | 0.0253 | 0.0264 | 0.0277 |
| Post-60th day / initial value ratio (%) | 114 | 115 | 117 | 123 |
| -20°C $\times$ 2 wks (t%) | 0 | 0 | 0 | 0 |
| 70°C $\times$ 2 wks (t%) | -1.8 | 0.4 | 2.5 | -3.7 |
| 50°C, 95%RH $\times$ 2 wks (t%) | -3.8 | 3.8 | 15.2 | -13.7 |
| (16) Polyol manufactured by Toho Chemical Industry Co., Ltd.<br>(17) Polyol manufactured by Toho Chemical Industry Co., Ltd.<br>(18) Polyol manufactured by Toho Chemical Industry Co., Ltd.<br>(19) Polyol manufactured by Toho Chemical Industry Co., Ltd. | | | | |

The aromatic monoamine polyols and the aniline polyols according to the present invention in Examples 1 and 2 had thermal conductivity rates with initial values around 0.021 to 0.023 W/mK. These initial values were practically the same as the initial values of the thermal conductivity rates for the water-blown formulations (3) and (4) and the water-blown formulations (5) to (8) using common polyols in the comparative examples. However, the thermal conductivity rate after 60 days of the aromatic monoamine polyols and aniline polyols according to the present invention were around 0.024 to 0.028 W/mK, which greatly differed from the 0.032 to 0.033 W/mK for the all water-blown formulations and the formulations using common polyols in the comparative examples. The deterioration trend for the thermal conductivity rates of the aromatic monoamine polyols and the aniline polyols according to the present invention resembles that of the HCFC-141b-blown formulation. Comparisons with the initial values therefor, which are a standard for deterioration speed, were 114 to 124%. All were less than the 128% of the HCFC-141 b-blown formulation, meaning that the deterioration speed slowed down. The thermal conductivity rates for the Toho polyols AE-270, AE-320, and AE-370 showed the least over-time deterioration. The thermal conductivity rates after 60 days were from 0.0248 to 0.0264 W/mK, and practically on the same level as the 0.0262 W/mK of the HCFC-141b-blown formulation and the 0.0245 W/mK of the HFC-245fa-blown formulation. Comparisons with the initial values of the thermal conductivity rates were 114% to 117%, compared with 128% for the HCFC-141b-formulation and 118% for the HFC-245fa-blown formulation. Thus, deterioration in the thermal conductivity rates is slower than that for HCFC-141b, and practically equal to or less than that for HFC-245fa.

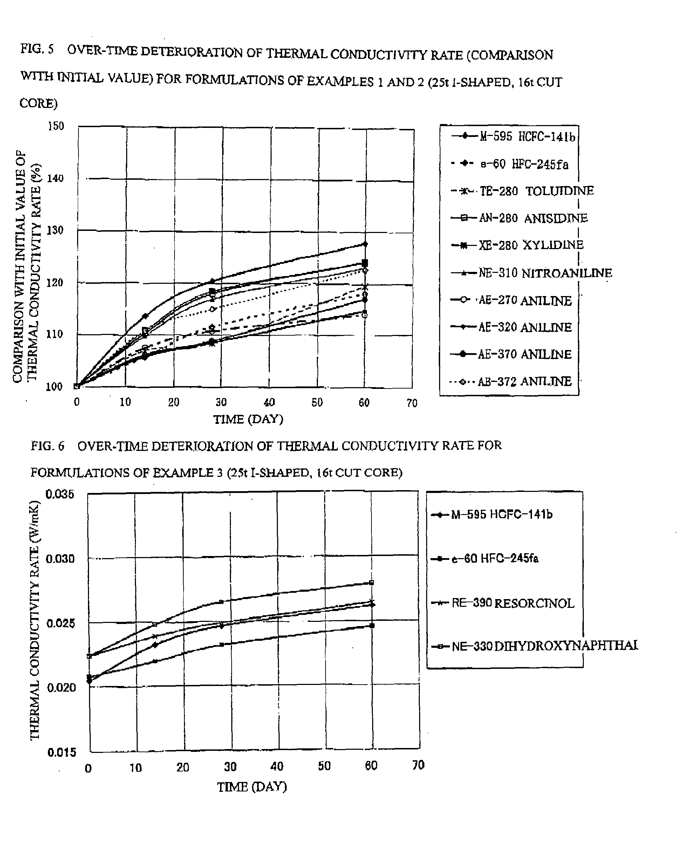

A thermal conductivity rate whose over-time deterioration is equal to HFC-245fa and HCFC-141b and whose deterioration is slow is thanks to the highly superior carbon dioxide barrier performance of the rigid polyurethane foam obtained from the aromatic monoamine polyols and the aniline polyols according to the present invention, since such results are not possible with related art regarding all water-blown formulations. Graphs in FIGS. 4 and 5 show the over-time deterioration of the thermal conductivity rate and the ratio with the initial value for the aromatic monoamine polyols and the aniline polyols in Examples 1 and 2.

The results showed that friability for the aromatic monoamine polyols and the aniline polyols at the jig temperature of 30°C varied from "none" to "slight", and the adhesion force differed from 3.0 to 10.8 kg depending on the polyol. Likewise, dimensional stability against moisture and heat also varied from -5.2 to 15.2%. Adhesiveness and dimensional stability against moisture and heat are correlated with the hydroxyl value of the polyol. Namely, a smaller hydroxyl value leads to better adhesiveness but worse dimensional stability, while a larger hydroxyl value leads to worse adhesiveness but better dimensional stability. This result indicates that it is possible to select the hydroxyl value of the polyol according to a required performance as needed on a case-by-case basis, and also indicates that optimization can be achieved through combination with other polyols.

(Example 3)

In example 3 shown in Table 6, panels were prepared using the following formulations: a formulation (20) having a ratio of 5.43 parts by mass of water, 1.06 part by mass of TMIHDA, 1.5 part by mass of SZ-1718 manufactured by Dow Corning Toray Co., Ltd. (formerly Nippon Unicar Co., Ltd.), and 193.5 parts by mass of Millionate MR-200 manufactured by Nippon Polyurethane Industry Co., Ltd. based on 100 parts by mass of a Toho polyol RE-390 manufactured by Toho Chemical Industry Co., Ltd. so as to achieve a total mass of 300 g; and a formulation (21) having a ratio of 5.01 parts by mass of water, 0.97 part by mass of TMHDA, 1.5 part by mass of SZ-1718, and 170.6 parts by mass of MR-200 based on 100 parts by mass of a Toho polyol NE-330 manufactured by Toho Chemical Industry Co., Ltd. so as to achieve a total mass of 300 g.

The formulation (20) in example 3 is a polyol in which ethylene oxide and propylene oxide are subjected to addition to resorcin at a mass ratio of 100/0, a molar quantity of 4.0/0, and a hydroxyl value of 390; and the formulation (21) is a polyol in which ethylene oxide and propylene oxide are subjected to addition to dihydroxynaphthalene at a mass ratio of 100/0, a molar quantity of 4.0/0, and a hydroxyl value of 330. All of the above are aromatic polyols.

[Table 6]

| Example 3 | | | |
|---|---|---|---|
| 1. Polyol name | | RE-390 | NE-330 |
| | | (20) | (21) |
| Type | | Resorcinol | Dihydroxynaphthalene |
| Hydroxyl value (mg KOH/g) | | 390 | 330 |
| Viscosity (mPa-s) (25°C) | | 2,300 | 3,200 |
| Aromatic concentration (%) | | 26 | 37 |
| EO/PO mass ratio (%) | | 100/0 | 100/0 |
| EO/PO moles | | 4.0/0 | 4.0/0 |
| 2. Formulation polyol pbw, | | 100 | 100 |
| Water (=1.80% in formulation) | | 5.43 | 5.01 |
| TMHDA (% in formulation) | | 1.06(0.35) | 0.97(0.35) |
| SZ-1718 | | 1.5 | 1.5 |
| MR-200 (NCO Index=1.10) | | 193.5 | 170.6 |
| 3. Reactivity | Cream time (sec) | 12 | 13 |
| | Gel time (sec) | 33 | 33 |
| 4. Open panel density (kg/m$^3$) | | 58.9 | 50.2 |
| 5. Pack panel performance (pack ratio %) | | 120 | 122 |
| Panel total density (kg/m$^3$) | | 70.6 | 61.4 |
| Core density (kg/m$^3$) | | 57.9 | 50.7 |
| Compression strength (kg/cm$^2$) | | 2.15 | 1.96 |
| Friability | | Trace | Trace |
| Adhesion force (kg) | | 9.5 | 8.8 |
| Thermal cond rate initial val. $\lambda$ 24 (W/mK) | | 0.0224 | 0.0224 |
| Thermal conductivity rate after 14 days | | 0.0239 | 0.0248 |
| Post-14th day / initial value ratio (%) | | 107 | 111 |
| Thermal conductivity rate after 28 days | | 0.0249 | 0.0265 |
| Post-28th day / initial value ratio (%) | | 111 | 118 |
| Thermal conductivity rate after 60 days | | 0.0264 | 0.0279 |

(continued)

| Example 3 | | | |
|---|---|---|---|
| 1. Polyol name | | RE-390 | NE-330 |
| | | (20) | (21) |
| Type | | Resorcinol | Dihydroxynaphthalene |
| Post-60th day / initial value ratio (%) | | 118 | 125 |
| -20°C × 2 wks (t%) | | -0.4 | 0 |
| 70°C × 2 wks (t%) | | -7.7 | 0.5 |
| 50°C, 95%RH × 2 wks (t%) | | -15.4 | 1.3 |
| (20) Polyol manufactured by Toho Chemical Industry Co., Ltd. (21) Polyol manufactured by Toho Chemical Industry Co., Ltd. | | | |

The aromatic polyols according to the present invention in example 3 had thermal conductivity rates with initial values around 0.022 W/mK. These initial values were practically the same as the initial values of the thermal conductivity rates for the water-blown formulations (3) and (4) and the water-blown formulations (5) to (8) using common polyols in the comparative examples. However, the thermal conductivity rate after 60 days of the polyols according to the present invention were around 0.026 to 0.028 W/mK, which greatly differed from the 0.032 to 0.033 W/mK for the all water-blown formulations and the formulations using common polyols in the comparative examples. The deterioration trend for the thermal conductivity rates of the aromatic polyols according to the present invention resembles that of the HCFC-141b-blown formulation. Comparisons with the initial values therefor, which are a standard for deterioration speed, were 118 to 125%. All were less than the 128% of the HCFC-141b-blown formulation, meaning that the deterioration speed slowed down.

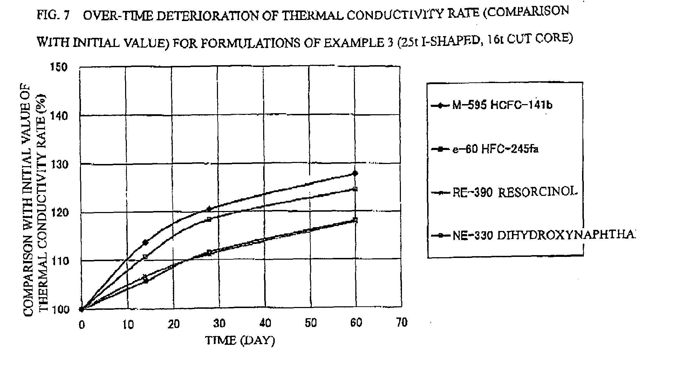

A thermal conductivity rate whose deterioration speed over time is slower than HCFC-141b is thanks to the highly superior carbon dioxide barrier performance of the rigid polyurethane foam obtained from the aromatic polyols according to the present invention, since such results are not possible with related art regarding all water-blown formulations. Graphs in FIGS. 6 and 7 show the over-time deterioration of the thermal conductivity rate and the ratio with the initial value for the aromatic polyols in example 3.

Friability for the aromatic polyols according to the present invention at the jig temperature of 30°C was judged as "none", and the adhesion force was 8.9 to 9.5 kg. Meanwhile, dimensional stability against moisture and heat varied from -15.4 to 1.3%. In general, adhesiveness and dimensional stability against moisture and heat are correlated with the hydroxyl value of the polyol. It is known that given the same initiator, a smaller hydroxyl value leads to better adhesiveness but worse dimensional stability, while a larger hydroxyl value leads to worse adhesiveness but better dimensional stability. In the present invention as well, a similar result can be expected when manufacturing foam with the same initiator, but varied hydroxyl values. Such a result indicates that it is possible to select the hydroxyl value of the polyol according to a required performance as needed on a case-by-case basis, and also indicates that optimization can be achieved through combination with other polyols.

BRIEF DESCRIPTION OF THE DRAWINGS

FIG. 1 is a graph respectively showing the relationships between time and thermal conductivity rates for a common chlorofluorocarbon-blown rigid polyurethane foam (raw material name: Hycel M-595) and an all water-blown rigid polyurethane foam (raw material name: Hycel M-505) that uses a common polyol and has a different surface condition;

FIG. 2 is a graph respectively showing the relationships between time and thermal conductivity rates for a common chlorofluorocarbon-blown rigid polyurethane foam, an all water-blown rigid polyurethane foam, and an all water-blown rigid polyurethane foam that uses a common polyol;

FIG. 3 is a graph respectively showing the relationships between time and comparisons with initial values of thermal conductivity rates for a common chlorofluorocarbon-blown rigid polyurethane foam, an all water-blown rigid polyurethane foam, and an all water-blown rigid polyurethane foam that uses a common polyol;

FTG.4 is a graph respectively showing the relationships between time and thermal conductivity rates for an aromatic monoamine polyol and an aniline polyol according to the present invention;

FIG. 5 is a graph respectively showing the relationships between time and comparisons with initial values of thermal conductivity rates for an aromatic monoamine polyol and an aniline polyol according to the present invention;
FIG. 6 is a graph respectively showing the relationships between time and thermal conductivity rate for an aromatic polyol according to the present invention; and
FIG. 7 is a graph respectively showing the relationships between time and comparisons with initial values of thermal conductivity rates for an aromatic polyol according to the present invention.

**Claims**

1. A manufacturing method of a rigid polyurethane foam for a heat insulation material, which is formed from blowing and molding using a mixture that includes polyisocyanate, a polyol, and a blowing agent, **characterized in that** a polyol with a hydroxyl value of 250 to 500 mg KOH/g and where ethylene oxide and propylene oxide are addition-polymerized to an aromatic monoamine compound at a mass ratio of 50 to 100 : 50 to 0 in a total molar quantity of 3 to 7 moles is used for at least a portion of the polyol component, and
the polyol is used in an amount of 20 to 100 parts by mass based on 100 parts by mass of the polyol component in a formulation.

2. The manufacturing method of a rigid polyurethane foam for a heat insulation material according to claim 1, **characterized in that**
the aromatic monoamine compound has a molecular weight of 90 to 170.

3. The manufacturing method of a rigid polyurethane foam for a heat insulation material according to claim 1 or 2, **characterized in that**
the aromatic monoamine compound is any one of or an arbitrary combination selected from the group consisting of aniline, anisidine, aminoacetoanilide, aminophenol, aminobenzoic ethyl ester, isopropoxyaniline, xylidine, cresidine, toluidine, phenetidine, α-phenylethylamine, β-phenylethylamine (phenethylamine), benzylamine, nitroaniline, and isomers thereof.

4. A manufacturing method of a rigid polyurethane foam for a heat insulation material, which is formed from blowing and molding using a mixture that includes polyisocyanate, a polyol, and a blowing agent, **characterized in that**
at least one polyether polyol with a hydroxyl value of 230 to 500 mg KOH/g and where ethylene oxide and propylene oxide are addition-polymerized to an aromatic diol compound at a mass ratio of 50 to 100 : 50 to 0 in a total molar quantity of 3 to 7 moles is used for at least a portion of the polyol component, and
the polyether polyol is used in an amount of 20 to 100 parts by mass based on 100 parts by mass of the polyol component in a formulation.

5. The manufacturing method of a rigid polyurethane foam for a heat insulation material according to claim 4, **characterized in that**
the aromatic diol compound has a molecular weight of 90 to 170.

6. The manufacturing method of a rigid polyurethane foam for a heat insulation material according to claim 4 or 5, **characterized in that**
the aromatic diol compound is any one of or an arbitrary combination selected from the group consisting of catechol, dihydroxynaphthalene, resorcin, and isomers thereof.

7. The manufacturing method of a rigid polyurethane foam for a heat insulation material according to any one of claims 1 to 6, **characterized in that**
the blowing agent is mainly carbon dioxide.

FIG. 1   FOAM SURFACE CONDITION OF ALL WATER-BLOWN FORMULATIONS AND OVER-

TIME DETERIORATION OF THERMAL CONDUCTIVITY RATE FOR HIGH CELL M-505

FORMULATIONS (25t I-SHAPED)

FIG. 2   OVER-TIME DETERIORATION OF THERMAL CONDUCTIVITY RATE FOR

FORMULATIONS OF COMPARATIVE EXAMPLES 1 TO 3 (25t I-SHAPED, 16t CUT CORE)

FIG. 3  OVER-TIME DETERIORATION OF THERMAL CONDUCTIVITY RATE (COMPARISON WITH INITIAL VALUE) FOR FORMULATIONS OF COMPARATIVE EXAMPLES 1 TO 3 (25t I-SHAPED, 16t CUT CORE)

FIG. 4  OVER-TIME DETERIORATION OF THERMAL CONDUCTIVITY RATE FOR FORMULATIONS OF EXAMPLES 1 AND 2 (25t I-SHAPED, 16t CUT CORE)

22

FIG. 5 OVER-TIME DETERIORATION OF THERMAL CONDUCTIVITY RATE (COMPARISON WITH INITIAL VALUE) FOR FORMULATIONS OF EXAMPLES 1 AND 2 (25t I-SHAPED, 16t CUT CORE)

FIG. 6 OVER-TIME DETERIORATION OF THERMAL CONDUCTIVITY RATE FOR FORMULATIONS OF EXAMPLE 3 (25t I-SHAPED, 16t CUT CORE)

FIG. 7   OVER-TIME DETERIORATION OF THERMAL CONDUCTIVITY RATE (COMPARISON

WITH INITIAL VALUE) FOR FORMULATIONS OF EXAMPLE 3 (25t I-SHAPED, 16t CUT CORE)

## INTERNATIONAL SEARCH REPORT

| | International application No. |
|---|---|
| | PCT/JP2005/018164 |

**A. CLASSIFICATION OF SUBJECT MATTER**
*C08G18/48*(2006.01), *C08G101/00*(2006.01)

According to International Patent Classification (IPC) or to both national classification and IPC

**B. FIELDS SEARCHED**

Minimum documentation searched (classification system followed by classification symbols)
*C08G18/00-18/87*(2006.01), *C08G101/00*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-354744 A (Toho Chemical Industry Co., Ltd.), 25 December, 2001 (25.12.01), Claims 1, 3, 5; Par. No. [0022]; examples (Family: none) | 1-3,7 |
| X | JP 2004-115772 A (Toho Chemical Industry Co., Ltd.), 15 April, 2004 (15.04.04), Claim 1; examples (Family: none) | 1-3,7 |

[X] Further documents are listed in the continuation of Box C.  [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 December, 2005 (13.12.05) | 20 December, 2005 (20.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 806 374 A1**

<table>
<tr><td colspan="2" align="center">INTERNATIONAL SEARCH REPORT</td><td>International application No.<br>PCT/JP2005/018164</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2-255818 A  (Takeda Chemical Industries, Ltd.),<br>16 October, 1990 (16.10.90),<br>Claims; page 2, upper right column, line 2 to lower left column, line 9; page 4, lower right column, lines 4 to 17<br>& US 5225453 A1        & CA 2003934 A1 | 4-7 |
| X | JP 3-231916 A  (Mitsui Toatsu Kabushiki Kaisha),<br>15 October, 1991 (15.10.91),<br>Claims 1, 2, 4, 9; page 8, tables 1, 2<br>(Family: none) | 1,7 |
| X | JP 8-156158 A  (Daido Kohan Kabushiki Kaisha, Nisshinbo Industries, Inc.),<br>18 June, 1996 (18.06.96),<br>Claims 1 to 4; Par. Nos. [0028], [0070], [0071]<br>& US 5645928 A1        & EP 716107 A2<br>& KR 155239 B | 4,7 |
| X | JP 10-251367 A  (Sanyo Chemical Industries, Ltd.),<br>22 September, 1998 (22.09.98),<br>Claims 1 to 10; examples<br>(Family: none) | 4,7 |

Form PCT/ISA/210 (continuation of second sheet) (April 2005)

## INTERNATIONAL SEARCH REPORT

| International application No. |
| --- |
| PCT/JP2005/018164 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    As a result of the search, it was found that the "PROCESS FOR PRODUCING RIGID POLYURETHANE FOAM FOR INSULATING MATERIAL" described in claims 1 to 3 is disclosed in document described in column C and thus is not novel. Accordingly, there is no relationship between claims 1 to 3 and the part of claim 7 quoting claims 1 to 3; and claims 4 to 6 and the part of claim 7 quoting claims 4 to 6 involving the same or corresponding "special technical features" within the meaning of PCT Rule 13.2, second sentence.
    Thus, claims 1 to 7 do not satisfy the requirement of unity of invention.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the
☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004107376 A
- JP 2002302528 A
- JP H08501346 A
- JP 2001027074 A
- JP 2001354744 A
- JP H0597956 A
- JP 2004115772 A
- JP 3547190 B